# EUROPEAN PATENT SPECIFICATION

(11) **EP 3 246 560 B1**
(45) Date of publication and mention of the grant of the patent: **17.07.2019**
(21) Application number: 17170190.7
(22) Date of filing: 09.05.2017
(51) Int. Cl.: F03D 5/00, F03D 5/06

(54) **A SYSTEM AND A METHOD FOR WIND ENERGY CONVERSION INVOLVING THE OSCILLATORY MOTION OF AN AIFOIL-LIKE WING**
EIN SYSTEM UND VERFAHREN ZUR WINDENERGIEUMWANDLUNG BEI DENEN EIN OSZILLIERENDER PROFILFLÜGEL VERWENDET WIRD
UN SYSTEME ET UN PROCEDE POUR LA CONVERSION DE L'ENERGIE EOLIENNE, COMPRENANT UNE AILE PROFILEE OSCILLANTE

(30) Priority: 16.05.2016 IT UA20163466
(43) Date of publication of application: 22.11.2017
(73) Proprietor: Universita' degli Studi di Genova, 16126 Genova (IT)
(72) Inventor: BORAGNO, Corrado, 16126 Genova (IT); BOCCALERO, Gregorio, 16126 Genova (IT)
(74) Representative: Villa, Livia

(56) References cited:
- US-A- 3 995 972
- US-A1- 2014 097 621

## Description

### FIELD OF THE INVENTION

The object of the present invention is methods and systems for generating electric energy, as well as sensor units that use them.

### STATE OF THE ART

Systems for obtaining electric energy from the wind are well-known.

Such systems are very bulky since they aim to generate a lot of electric energy, for example from a minimum of a few KWatt to a maximum of a few MWatt.

Such systems are very complicated.

US patent n° 3995972 discloses a system for obtaining electric energy from the wind in which a wing moves alternately up and down due to the wind and oscillates about a horizontal axis; the wing maintains a constant angular position while it ascends and while it descends, and rotates about the axis only when it reaches the maximum lower and upper vertical positions due to a collision against a fixed element, which is slightly elastic in order to avoid that the collision damages the wing.

### SUMMARY

The general purpose of the present invention is to provide a solution that is simple, that is applicable to the generation of a little electric energy, in particular for maximum consumptions of 100 mW and for average consumptions much lower than 100 mW (often the consumption is of the order of 10 mW or 1 mW), and that can be used not only with air flows, but also with flows of other fluids.

A more specific purpose is that of improving the known solutions. For example, the solution according to US patent n° 3995972 has various features that reduce the efficiency of the conversion of the motion of the wing into electric energy: collisions of the wing against fixed elements, sliding of carriages along vertical shafts, etc..

Such purposes are accomplished by the method and by the system having the technical features set out in the attached claims.

The attached claims are an integral part of the present description, but they are not reproduced hereinafter for the sake of brevity.

Also forming the object of the present invention are applications of the method and of the system in the field of sensors, according to the attached claims.

### LIST OF FIGURES

The present invention will become clearer from the following detailed description to be considered together with the attached drawings, in which:
Fig. 1 shows a schematic side view of an embodiment of a system according to the present invention,
Fig. 2 shows a schematic front view of the embodiment of Fig. 1,
Fig. 3 shows, in particular, a component of the system of Fig. 1 and of Fig. 2 in three different examplary positions during the operation of the system, and
Fig. 4 shows an electrical block diagram of a circuitry in part integrated in and in part connected to the system of Fig. 1 and of Fig. 2.

As can easily be understood, there are various ways to practically implement the present invention that is defined in its main advantageous aspects in the attached claims.

### DETAILED DESCRIPTION

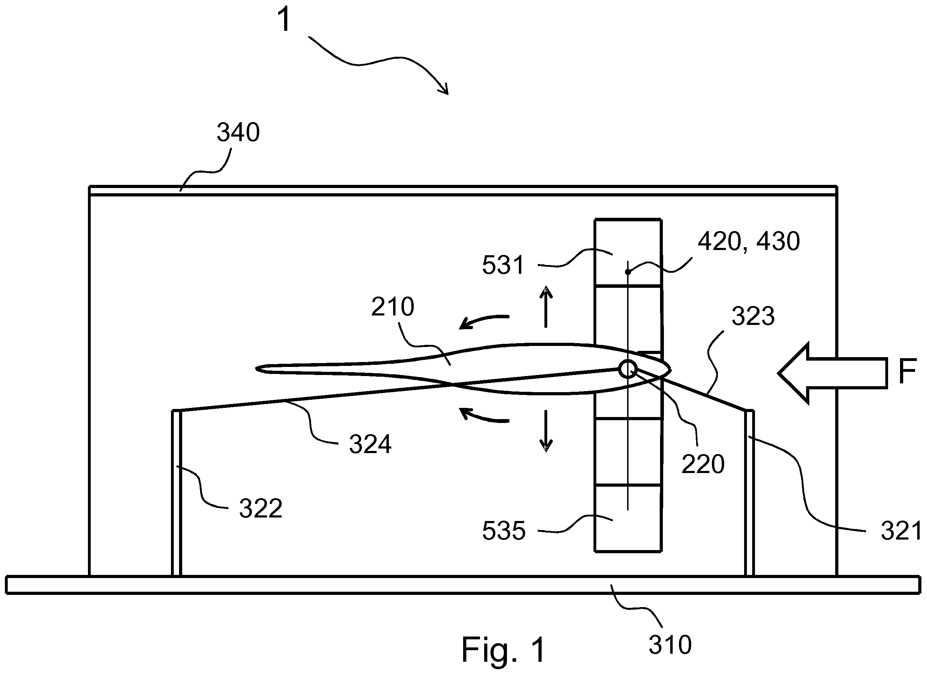

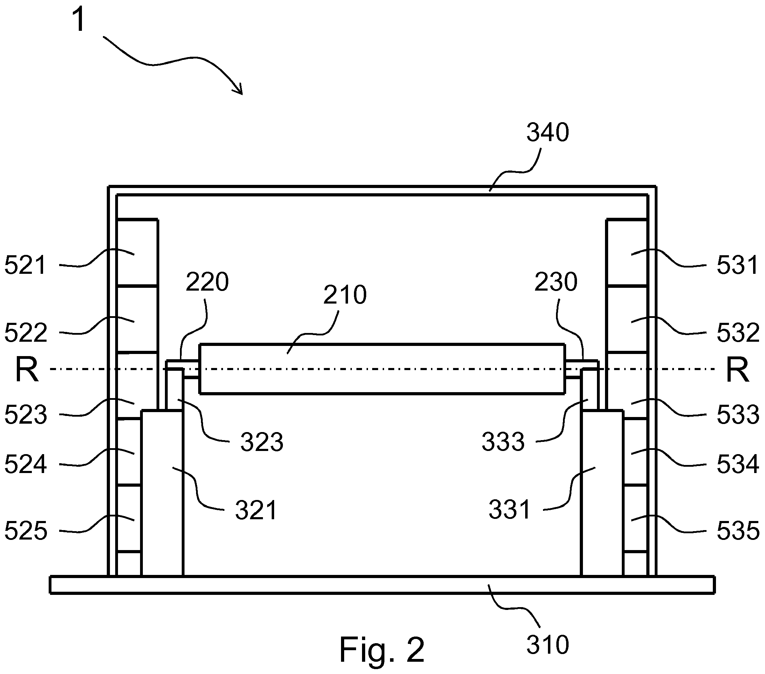

Fig. 1 and Fig. 2 show a system 1 for generating electric energy from a flow F of a fluid, typically a flow of a gas (for example air).

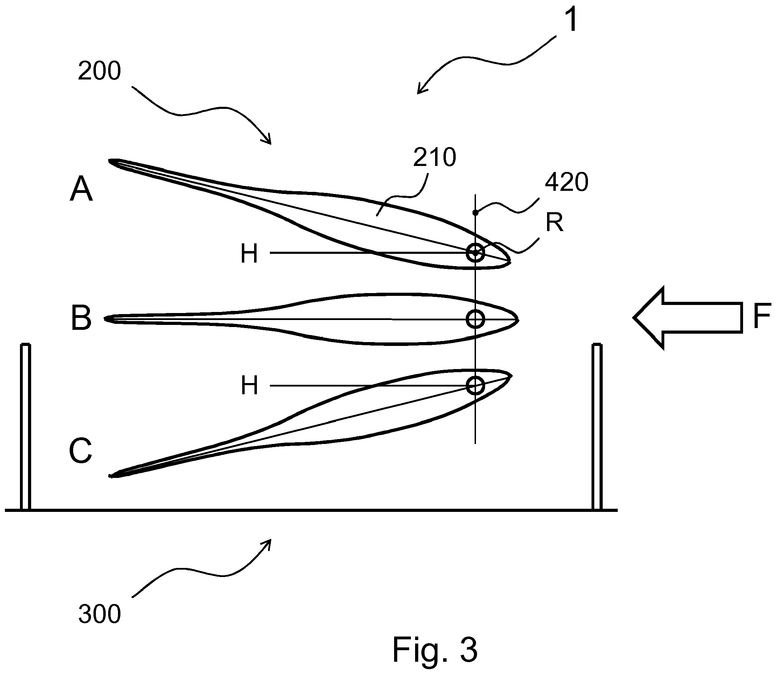

The system 1 comprises a wing 200 (see also Fig. 3) and a frame 300 (see also Fig. 3). The wing 200 comprises a wing surface 210, as well as a first pivot 220 and a second pivot 230 that have a same axis R and that project from the wing surface 210 on its opposite sides. In the figures, the wing surface 210 is curved; however, according to simpler embodiments, the wing surface could be simply a flat plate.

The frame 300 comprises a base block 310, a left front shaft 321 (fixed vertically on the base block 310), a left rear shaft 322 (fixed vertically on the base block 310), a right front shaft 331 (fixed vertically on the base block 310), a right rear shaft 332 (fixed vertically on the base block 310), inverted U-shaped element 340 (fixed on the base block 310); the base block 310 and the element 340 laterally define a conduit in which the fluid of the flow F flows.

The wing 200 is adapted to move during the operation of the system 1, whereas the frame is adapted to remain fixed during the operation of the system 1.

The pivot 220 is constrained permanently to the left front shaft 321 through a first elastically extensible front element 323 (for example an elastic band or a spring) and permanently to the left rear shaft 322 through a first elastically extensible rear element 324 (for example an elastic band or a spring).

The pivot 230 is constrained permanently to the right front shaft 331 through a second elastically extensible front element 333 (for example an elastic band or a spring) and permanently to the right rear shaft 332 through a second elastically extensible rear element 334 (for example an elastic band or a spring).

Therefore, when the wing 200 is impinged by the fluid flow F, the wing surface 210 rotates (freely or without constraints) in an alternate manner about the axis R, the pivot 220 moves in an alternate manner along a first trajectory 420 (which is substantially predetermined based on the structure and on its components and parameters) and the pivot 230 moves in an alternate manner along a second trajectory 430 (which is substantially predetermined based on the structure and on its components and parameters).

Such movements are schematised by the arrows in Fig. 1.

In Fig. 3, it is possible to see the wing 200 in a position A in which the pivots are in an upper position and the wing is inclined with the vertex lowered with respect to a horizontal direction H, in a position B in which the pivots are in an intermediate position and the wing is horizontal, in a position C in which the pivots are in a lower position and the wing is inclined with the vertex raised with respect to a horizontal direction H.

In general, the method for generating electric energy provides for:
A) generating induced electric currents resulting from the reciprocating motion of at least one magnet and at least one coil, wherein the magnet or the coil is fixed and respectively the coil or the magnet moves along a substantially predetermined trajectory, and
B) carrying out a motion of a mobile wing having a wing surface and a rotational axis (in particular substantially horizontal), and impinged by a driving fluid flow.

If the axis is constrained permanently to a fixed structure through at least one elastically extensible element, when the wing surface is impinged by the fluid, the wing rotates, thereby performing oscillations about the axis and the axis translates, thereby performing oscillations along the trajectory.

Such a constraint is permanent in the sense that it acts on the wing, in particular on its axis, whatever the vertical position of the axis (see for example the three positions of Fig. 3). The force exerted on the wing by the elastically extensible element depends on the vertical position of the axis; for example, when the wing is at the top the force (position A) is strong and pulls the wing downwards, and when the wing is at the bottom the force (position C) is strong and pulls the wing upwards. It should be noted that in the example of Fig. 1, the elements 323, 324, 333, 334 exert on the wing forces of variable strength and direction, with horizontal components of variable strength and with vertical components of variable strength.

The magnet can be associated to the fixed structure and to the mobile wing and the coil can be associated to the mobile wing or to the fixed structure.

In the example of Fig. 1 and Fig. 2, there is a magnet integrated in each of the two pivots 220 and 230; therefore, the magnets are mobile like the pivots.

In the example of Fig. 1 and Fig. 2, there are five coils 521, 522, 523, 524, 525 fixed to the element 340 on the left of the wing 200 and five coils 531, 532, 533, 534, 535 fixed to the element 340 on the right of the wing 200; therefore, the coils are fixed.

A first embodiment of a system according to the present invention is shown in Fig. 1 and Fig. 2, and it comprises the wing 200 and the frame 300;
the wing 200 is adapted to move and essentially comprises:
- the wing surface 210, and
- the pivot 220 and the pivot 230 that have the same axis R and that project from the wing surface 210 on its opposite sides;
the frame 300 is adapted to remain fixed and essentially comprises:
- a structure, in particular the base block 310 and the shafts 321, 322, 331 and 332. The pivot 220 is associated to a first magnet and is constrained to the structure through the front element 323 and optionally through the rear element 324.

The pivot 230 is associated to a second magnet and is constrained to the structure through the front element 333 and optionally through the rear element 334.

The trajectory 420 of the pivot 220 is associated to at least one first coil (for example the coil 523), preferably a first plurality of coils 521, 522, 523, 524, 525.

The trajectory 430 of the pivot 230 is associated to at least one second coil (for example the coil 523), preferably a second plurality of coils 531, 532, 533, 534, 535.

The motion of the wing 200 when it is impinged by the driving fluid flow F causes induced electric currents in the coils.

The elements 324 and 334 allow better control of the position and of the motion of the wing 200.

A second embodiment of a system according to the present invention is not shown in the figures and differs from the first essentially in that:
- the pivot 220 is associated to a first coil,
- the pivot 230 is associated to a second coil,
- the trajectory 420 of the pivot 220 is associated to at least one first magnet, preferably a first plurality of magnets,
- the trajectory 430 of the pivot 230 is associated to at least one second magnet, preferably a second plurality of magnets.

In both examples described earlier, electric currents are induced in the coils this is what the generation of electric energy consists of.

The physical phenomenon forming the basis of the movements of the wing 200 is aeroelasticity.

The technical features set out hereinafter are valid for both examples, but they are described with reference to the first example and therefore to Fig. 1 and Fig. 2.

The trajectories 420 and 430 are substantially rectilinear and vertical.

The elements 323, 324, 333, 334 have a first end fixed to the pivots 220 and 230 and a second end fixed at lower points of the structure, in particular the shafts 321, 322, 331, 332. In this way, the flow F tends to lift the wing 200 whereas the elements 323, 324, 333, 334 tend to lower the wing 200.

The wing 200 is placed and moves inside the conduit 340. In this way, the flow is properly guided in the direction of the wing 200 and the movements of the wing do not risk to be influenced by different flows from that provided for at the design stage.

In the examples described earlier, the pivots of the wing are constrained to the fixed structure of the frame only through the elastic elements.

It is also possible to provide for a first guide for guiding the motion of the first pivot, and a second guide for guiding the motion of the second pivot. Particularly in this case, a single elastic element may be sufficient for each pivot; the elastic element could be fixed, for example, directly to the base block of the frame under the pivot.

The induced electric currents in the coils must be brought to a circuitry to then be able to use the associated electric energy.

Therefore, there are a series of electric conductors connected to the coils even if they are not shown in Fig. 1 and Fig. 2.

The electric energy associated to the induced electric currents is advantageously stored in a "supercapacitor". For example, Fig. 3 shows the coils 522, 523, 524, 532, 533, 534 and the "supercapacitor" 1004.

In the circuitry of Fig. 3, there is an active rectifier 1002 electrically connected upstream of the "supercapacitor" 1004 and a voltage regulator 1006 electrically connected downstream of the "supercapacitor" 1004. Of course, the active rectifier 1002 is connected to the coils 522, 523, 524, 532, 533, 534.

Across the capacitor 1004 there is a voltage that can be considered direct whereas at the output of the regulator 1006 there is a regulated direct voltage.

The voltage of the capacitor 1004 is used to power a circuitry 1014 to carry out measurements and, possibly, store the measurements inside it.

The voltage of the regulator 1006 is used to power a processor 1008 and a transmitter 1010.

The circuitry 1014 is connected to one or more sensors, in particular to four sensors 1021, 1022, 1023 and 1024. The circuitry 1014 can also be capable of measuring the voltage across the capacitor 1004. The circuitry 1014 can, moreover, carry out the conversion from analogue to digital of the measurements carried out to then send them to the processor 1008.

The transmitter 1010 is adapted to transmit information, in particular the measurements received by the processor 1008, and is connected to an antenna 1012 to wirelessly diffuse the electrical signals generated at its output.

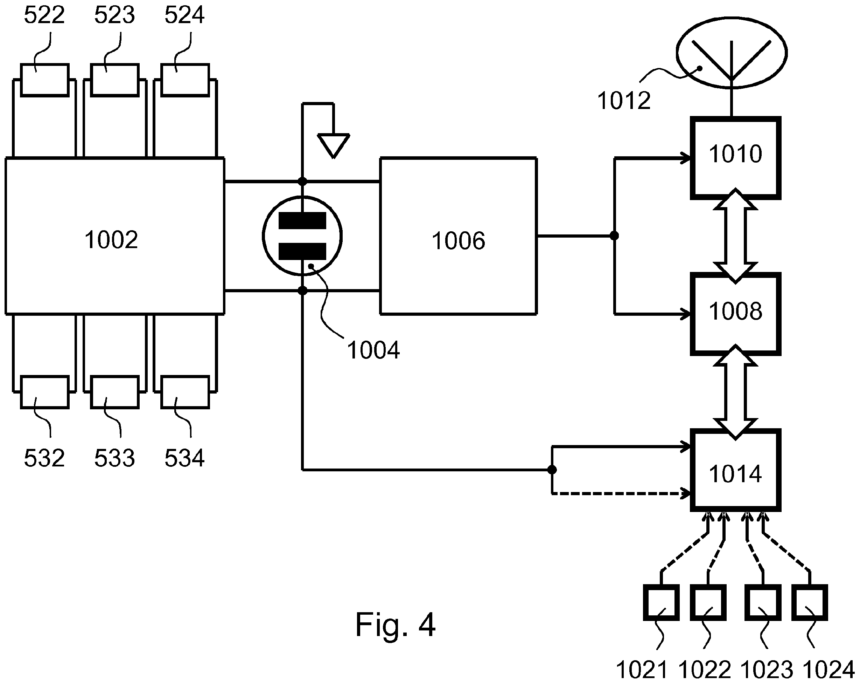

The processor 1008 can, moreover, control the generation and consumption of electric energy in the circuitry of Fig. 4.

It should be understood that the maximum power absorbed by the circuitry of Fig. 4 is low, much less than 100 mW (for example 10 mW or 1 mW), if the transmitter must cover short distances, for example a few metres.

A sensor unit according to the present invention comprises at least one system for generating electric energy based on a mobile wing.

Moreover, a sensor unit according to the present invention comprises at least one sensor and at least one transmitter.

The transmitter is electrically connected (directly or indirectly) to the sensor and is adapted to transmit measurements carried out by the sensor.

Both the sensor (more specifically the circuitry associated to the sensor) and the transmitter are powered by the electric energy generating system.

The transmitter can be adapted to transmit measurements to an electronic data collection unit which can be arranged preferably in the vicinity of the sensor unit, for example a few metres or a few tens of metres away.

The sensor unit according to the present invention preferably comprises a device for storing electric energy.

The transmitter can be adapted to transmit measurements only if such a device contains at least one first predetermined amount of electric energy. For example, the processor 1008 can receive the voltage value across the capacitor 1004 from the circuitry 1014, derive from such a value whether the energy stored is sufficient for a transmission of information and, in the positive case, activate the transmitter 1010.

The sensor (more precisely the circuitry associated to the sensor) can be adapted to carry out measurements only if such a device contains at least one second predetermined amount of electric energy; typically, the second amount is less than the first amount. For example, the processor 1008 can receive the voltage value across the capacitor 1004 from the circuitry 1014, derive from such a value whether the energy stored is sufficient for a correct operation of the circuitry 1014 in combination with the sensors 1021, 1022, 1023 and 1024, and, in the positive case, activate the circuitry 1014.

A system for generating electric energy based on a mobile wing has various applications.

For example, it can be used in a sensor unit adapted to be fixed to a building, in particular a facade of a building, or a civil construction, in particular a bridge structure; in this case, the system is adapted to generate electric energy due to the wind, and a sensor of the sensor unit detects strains or stresses or deformations or displacements in/of said construction.

For example, it can be used in a sensor unit adapted to be fixed inside a gas supply pipe; in this case, the system is adapted to generate electric energy due to gas flow into the pipe, and a sensor of the sensor unit detects the gas flow.

For example, it can be like a power supply for sensors and actuators and, more generally wireless network nodes in the infrastructure called Internet of Things.

## Claims

1. Method for generating electric energy that provides for:
A) generating induced electric currents resulting from the reciprocating motion of a magnet built into a pivot (220, 230) and a coil (523, 533), wherein the magnet (220, 230) or coil (523, 533) is fixed and respectively the coil (523, 533) or magnet (220, 230) moves along a trajectory (420, 430), and
B) carrying out a motion of a mobile wing (200) having a wing surface (210) and a rotational axis (R), and impinged by a fluid flow (F);
wherein the axis (R) is constrained permanently to a fixed structure (310, 321, 322, 331, 332) through at least one elastically extensible element (323, 333);
so that when the wing surface (210) is impinged by the fluid flow (F), the wing rotates, thereby performing oscillations about the axis (R), and the axis (R) translates, thereby performing oscillations along the trajectory (420, 430);
wherein the magnet is associated to the fixed structure (310, 321, 322, 331, 332) and the coil is associated to the mobile wing (200),
or
wherein the coil (523, 533) is associated to the fixed structure (310, 321, 322, 331, 332) and the magnet (220, 230) is associated to the mobile wing (200).

2. System (1) for generating electric energy, comprising a wing (200) and a frame (300);
wherein the wing (200) is adapted to be impinged by a fluid flow (F) and thereby to move, and comprises:
- a wing surface (210), and
- a first pivot (220) and a second pivot (230) having the same axis (R) and protruding from said wing surface (210) on opposite sides;
wherein the frame (300) is adapted to remain fixed and comprises:
- a structure (310, 321, 322, 331, 332);
wherein the first pivot (220) is constrained permanently to said structure (310, 321, 322, 331, 332) through a first elastically extensible front element (323) and optionally a first elastically extensible rear element (324), whereby the first pivot (220) is adapted to move alternately along a first predetermined trajectory (420) when said wing (200) is impinged by the fluid flow (F);
wherein the second pivot (230) is constrained permanently to said structure (310, 321, 322, 331, 332) through a second elastically extensible front element (333) and optionally a second elastically extensible rear element (334), whereby the second pivot (230) is adapted to move alternately along a second predetermined trajectory (430) when said wing (200) is impinged by the fluid flow (F);
wherein the wing surface (210) is adapted to freely rotate about said same axis (R) when said wing (200) is impinged by the fluid flow (F);
wherein the first pivot (220) is associated to a first magnet;
wherein the second pivot (230) is associated to a second magnet;
wherein the first trajectory (420) is associated to at least one first coil (523), preferably a first plurality of coils (521, 522, 523, 524, 525);
wherein the second trajectory (430) is associated to at least one second coil (533), preferably a second plurality of coils (531, 532, 533, 534, 535);
whereby the movement of said wing (200) when it is impinged by the fluid flow (F) causes induced electrical currents in the first coil (523), or in the first plurality of coils (521, 522, 523, 524, 525), and in the second coil (533), or in the second plurality of coils (531, 532, 533, 534, 535).

3. System for generating electric energy, comprising a wing and a frame;
wherein the wing is adapted to be impinged by a fluid flow and thereby to move, and comprises:
- a wing surface, and
- a first pivot and a second pivot having the same axis and protruding from said wing surface on opposite sides;
wherein the frame is adapted to remain fixed and comprises:
- a structure;
wherein the first pivot is constrained permanently to said structure through a first elastically extensible front element and optionally a first elastically extensible rear element, whereby the first pivot is adapted to move alternately along a first predetermined trajectory when said wing is impinged by the fluid flow;
wherein the second pivot is constrained permanently to said structure through a second elastically extensible front element and optionally a second elastically extensible rear element, whereby the second pivot is adapted to move alternately along a second predetermined trajectory when said wing is impinged by the fluid flow;
wherein the wing surface is adapted to freely rotate about said same axis when said wing is impinged by the fluid flow;
wherein the first pivot is associated to a first coil;
wherein the second pivot is associated to a second coil;
wherein the first trajectory is associated to at least a first magnet, preferably a first plurality of magnets;
wherein the second trajectory is associated to at least a second magnet, preferably a second plurality of magnets;
whereby the movement of said wing when it is impinged by the fluid flow causes induced electric currents in the first coil and in the second coil.

4. System for generating electric energy according to claim 2 or 3, wherein said first and second trajectories (420, 430) are rectilinear and vertical.

5. System for generating electric energy according to claim 2 or 3 or 4,
wherein each of said first and second front elements (323, 333) have one end fixed to a lower front point (321, 331) of said structure, and/or
wherein each of said first and second rear elements (324, 334) have one end fixed to a lower rear point (322, 332) of said structure.

6. System for generating electric energy according to any one of claims 2 to 5, comprising a conduit (340) in which said wing (200) is placed and moves.

7. System for generating electric energy according to any one of claims 2 to 6, comprising a first guide for guiding the motion of said first pivot,
comprising a second guide for guiding the motion of said second pivot.

8. System for generating electric energy according to any one of claims 2 to 7, comprising a supercapacitor (1004) for storing electric energy associated with said induced electric currents.

9. System for generating electric energy according to claim 8, comprising an active rectifier (1002) electrically connected upstream of said supercapacitor (1004), a voltage regulator (1006) electrically connected downstream of said supercapacitor (1004), and a processor (1008) for controlling the generation and consumption of electric energy.

10. Sensor unit comprising a sensor (1021, 1022, 1023, 1024), a transmitter (1010) and a generator system according to any one of claims 2 to 9, wherein the transmitter (1010) is electrically connected to said sensor (1021, 1022, 1023, 1024) and is adapted to transmit measurements, said measurements being carried out by said sensor (1021, 1022, 1023, 1024), wherein said sensor (1021, 1022 1023 1024) and said transmitter (1010) are powered by said generator system (1002, 1004, 1006).

11. Sensor unit according to claim 10, wherein said transmitter (1010) is adapted to transmit measurements to an electronic data collection unit.

12. Sensor unit according to claim 10 or 11, comprising an electric energy storage device (1004), wherein said transmitter (1010) is adapted to transmit measurements only if said device (1004) contains at least a first predetermined amount of electric energy.

13. Sensor unit according to claim 12, wherein said sensor (1021, 1022, 1023, 1024) is adapted to carry out measurements only if said device (1004) contains at least a second predetermined amount of electric energy, said second amount being lower than said first amount.

14. Sensor unit according to any one of claims 10 to 13, adapted to be fixed to a building, in particular a facade of a building, or a civil construction, in particular a bridge structure, and to generate electric energy due to wind, wherein said sensor detects strains or stresses or deformations or displacements in/of said construction.

15. Sensor unit according to any one of claims 10 to 13, adapted to be fixed inside a gas supply pipe and to generate electric energy due to gas flow into the pipe, wherein said sensor detects the gas flow.

## Patentansprüche

1. Verfahren zum Erzeugen von elektrischer Energie, wobei folgendes bereitgestellt wird.
A) Erzeugen induzierter elektrischer Ströme, die aus der hin- und hergehenden Bewegung eines in einen Drehpunkt (220, 230) eingebauten Magneten und einer Spule (523, 533) resultieren, wobei der Magnet (220, 230) oder die Spule (523, 533) fixiert ist, und wobei sich entsprechend die Spule (523, 533) oder der Magnet (220, 230) entlang einer Trajektorie (420, 430) bewegt; und
B) Ausführen einer Bewegung eines mobilen Flügels (200) mit einer Flügeloberfläche (210) und einer Drehachse (R), und unter Aufprall einer Fluidströmung (F);
wobei die Achse (R) durch mindestens ein elastisch erweiterbares Element (323, 333) dauerhaft an eine feststehende Struktur (310, 321, 322, 331, 332) gebunden ist;
so dass, wenn die Fluidströmung (F) auf die Flügeloberfläche (210) trifft, sich der Flügel dreht, wodurch Oszillationen um die Achse (R) durchgeführt werden und sich die Achse (R) verschiebt, wodurch Oszillationen entlang der Trajektorie (420, 430) durchgeführt werden;
wobei der Magnet der feststehenden Struktur (310, 321, 322, 331, 332) zugeordnet ist, und wobei die Spule dem mobilen Flügel (200) zugeordnet ist;
oder
wobei die Spule (523, 533) der feststehenden Struktur (310, 321, 322, 331, 332) zugeordnet ist, und wobei der Magnet (220, 230) dem mobilen Flügel (200) zugeordnet ist.

2. System (1) zum Erzeugen von elektrischer Energie, wobei das System einen Flügel (200) und einen Rahmen (300) umfasst;
wobei eine Fluidströmung (F) auf den Flügel (200) auftreffen kann und sich dieser dadurch bewegen kann, und folgendes umfassend:
- eine Flügeloberfläche (210), und
- einen ersten Drehpunkt (220) und einen zweiten Drehpunkt (230), welche die gleiche Achse (R) aufweisen und von der Flügeloberfläche (210) auf gegenüberliegenden Seiten vorstehen;
wobei der Rahmen (300) feststehend bleiben kann und folgendes umfasst:
- eine Struktur (310, 321, 322, 331, 332);
wobei der erste Drehpunkt (220) durch ein erstes elastisch erweiterbares vorderes Element (323) und optional ein erstes elastisch erweiterbares hinteres Element (324) dauerhaft an die Struktur (310, 321, 322, 331, 332) gebunden ist, wodurch sich der erste Drehpunkt (220) wechselweise entlang einer ersten vorbestimmten Trajektorie (420) bewegen kann, wenn die Fluidströmung (F) auf den Flügel (200) auftrifft;
wobei der zweite Drehpunkt (230) durch ein zweites elastisch erweiterbares vorderes Element (333) und optional ein zweites elastisch erweiterbares hinteres Element (334) dauerhaft an die Struktur (310, 321, 322, 331, 332) gebunden ist, wodurch sich der zweite Drehpunkt (230) wechselweise entlang einer zweiten vorbestimmten Trajektorie (430) bewegen kann, wenn die Fluidströmung (F) auf den Flügel (200) auftrifft;
wobei sich die Flügeloberfläche (210) frei um die gleiche Achse (R) drehen kann, wenn die Fluidströmung (F) auf den Flügel (200) auftrifft;
wobei der erste Drehpunkt (220) einem ersten Magneten zugeordnet ist;
wobei der zweite Drehpunkt (230) einem zweiten Magneten zugeordnet ist; wobei die erste Trajektorie (420) mindestens einer ersten Spule (523) zugeordnet ist, vorzugsweise einer ersten Mehrzahl von Spulen (521, 522, 523, 524, 525);
wobei die zweite Trajektorie (430) mindestens einer zweiten Spule (533) zugeordnet ist, vorzugsweise einer zweiten Mehrzahl von Spulen (531, 532, 533, 534, 535);
wobei die Bewegung des Flügels (200), wenn die Fluidströmung (F) auf diesen auftrifft, induzierte elektrische Ströme in der ersten Spule (523) oder in der ersten Mehrzahl von Spulen (521, 522, 523, 524, 525) und in der zweiten Spule (533) oder in der zweiten Mehrzahl von Spulen (531, 532, 533, 534, 535) bewirkt.

3. System zum Erzeugen von elektrischer Energie, wobei das System einen Flügel und einen Rahmen umfasst;
wobei eine Fluidströmung auf den Flügel auftreffen kann und sich dieser dadurch bewegen kann, und folgendes umfassend:
- eine Flügeloberfläche, und
- einen ersten Drehpunkt und einen zweiten Drehpunkt, welche die gleiche Achse aufweisen und von der Flügeloberfläche auf gegenüberliegenden Seiten vorstehen;
wobei der Rahmen feststehend bleiben kann und folgendes umfasst:
- eine Struktur;
wobei der erste Drehpunkt durch ein erstes elastisch erweiterbares vorderes Element und optional ein erstes elastisch erweiterbares hinteres Element dauerhaft an die Struktur gebunden ist, wodurch sich der erste Drehpunkt wechselweise entlang einer ersten vorbestimmten Trajektorie bewegen kann, wenn die Fluidströmung auf den Flügel auftrifft;
wobei der zweite Drehpunkt durch ein zweites elastisch erweiterbares vorderes Element und optional ein zweites elastisch erweiterbares hinteres Element dauerhaft an die Struktur gebunden ist, wodurch sich der zweite Drehpunkt wechselweise entlang einer zweiten vorbestimmten Trajektorie bewegen kann, wenn die Fluidströmung auf den Flügel auftrifft;
wobei sich die Flügeloberfläche frei um die gleiche Achse drehen kann, wenn die Fluidströmung auf den Flügel auftrifft;
wobei der erste Drehpunkt einer ersten Spule zugeordnet ist;
wobei der zweite Drehpunkt einer zweiten Spule zugeordnet ist;
wobei die erste Trajektorie mindestens einem ersten Magneten zugeordnet ist, vorzugsweise einer ersten Mehrzahl von Magneten;
wobei die zweite Trajektorie mindestens einem zweiten Magneten zugeordnet ist, vorzugsweise einer zweiten Mehrzahl von Magneten;
wobei die Bewegung des Flügels, wenn die Fluidströmung auf diesen auftrifft, induzierte elektrische Ströme in der ersten Spule und in der zweiten Spule bewirkt.

4. System zum Erzeugen von elektrischer Energie nach Anspruch 2 oder 3, wobei die erste und die zweite Trajektorie (420, 430) geradlinig und vertikal sind.

5. System zum Erzeugen von elektrischer Energie nach einem der Ansprüche 2 bis 4,
wobei jedes der ersten und zweiten vorderen Elemente (323, 333) ein Ende aufweist, das an einem unteren vorderen Punkt (321, 331) der Struktur fixiert ist; und/oder
wobei jedes der ersten und zweiten hinteren Elemente (324, 334) ein Ende aufweist, das an einem unteren hinteren Punkt (322, 332) der Struktur fixiert ist.

6. System zum Erzeugen von elektrischer Energie nach einem der Ansprüche 2 bis 5, das einen Kanal (340) umfasst, in dem der Flügel (200) platziert ist und sich bewegt.

7. System zum Erzeugen von elektrischer Energie nach einem der Ansprüche 2 bis 6, das eine erste Führung zum Führen der Bewegung des ersten Drehpunkts umfasst sowie eine zweite Führung zum Führen der Bewegung des zweiten Drehpunkts.

8. System zum Erzeugen von elektrischer Energie nach einem der Ansprüche 2 bis 7, das einen Superkondensator (1004) zum Speichern elektrischer Energie umfasst, die den induzierten elektrischen Strömen zugeordnet ist.

9. System zum Erzeugen von elektrischer Energie nach Anspruch 8, das folgendes umfasst: einen aktiven Gleichrichter (1002), der stromaufwärts des Superkondensators (1004) elektrisch verbunden ist, einen Spannungsregler (1006), der stromabwärts des Superkondensators (1004) elektrisch verbunden ist, und einen Prozessor (1008) zur Steuerung der Erzeugung und des Verbrauchs elektrischer Energie.

10. Sensoreinheit, die einen Sensor (1021, 1022, 1023, 1024), einen Sender (1010) und ein Erzeugungssystem nach einem der Ansprüche 2 bis 9 umfasst, wobei der Sender (1010) mit dem Sensor (1021, 1022, 1023, 1024) elektrisch verbunden ist und Messungen übermitteln kann, wobei die Messungen durch den Sensor (1021, 1022, 1023, 1024) durchgeführt werden, wobei der Sensor (1021, 1022, 1023, 1024) und der Sender (1010) durch das Erzeugungssystem (1002, 1004, 1006) betrieben werden.

11. Sensoreinheit nach Anspruch 10, wobei der Sender (1010) Messungen an eine Einheit zur Erfassung elektronischer Daten übermitteln kann.

12. Sensoreinheit nach Anspruch 10 oder 11, die eine Speichervorrichtung (1004) für elektrische Energie umfasst, wobei der Sender (1010) Messungen nur übermitteln kann, wenn die Vorrichtung (1004) wenigstens eine erste vorbestimmte Menge elektrischer Energie enthält.

13. Sensoreinheit nach Anspruch 12, wobei der Sensor (1021, 1022, 1023, 1024) Messungen nur durchführen kann, wenn die Vorrichtung (1004) wenigstens eine zweite vorbestimmte Menge elektrischer Energie enthält, wobei die zweite Menge geringer ist als die erste Menge.

14. Sensoreinheit nach einem der Ansprüche 10 bis 13, die an einem Gebäude angebracht werden kann, insbesondere an einer Fassade eines Gebäudes oder an einem öffentlichen Bauwerk, insbesondere einer Brückenstruktur, und die durch Wind elektrische Energie erzeugen kann, wobei der Sensor Beanspruchungen oder Belastungen oder Verformungen oder Verschiebungen in dem Bauwerk oder des Bauwerks erfasst.

15. Sensoreinheit nach einem der Ansprüche 10 bis 13, die in einer Gasversorgungsrohrleitung angebracht werden und durch die Gasströmung in die Rohrleitung elektrische Energie erzeugen kann, wobei der Sensor die Gasströmung erfasst.

## Revendications

1. Procédé de production d'énergie électrique qui comprend les étapes consistant à :
A) générer des courants électriques induits résultant du mouvement alternatif d'un aimant intégré dans un pivot (220, 230) et d'une bobine (523, 533), l'aimant (220, 230) ou la bobine (523, 533) étant fixe et respectivement la bobine (523, 533) ou l'aimant (220, 230) se déplaçant le long d'une trajectoire (420, 430), et
B) effectuer un mouvement d'une aile mobile (200) ayant une surface d'aile (210) et un axe de rotation (R), et étant heurtée par un écoulement de fluide (F) ;
l'axe (R) étant contraint de façon permanente sur une structure fixe (310, 321, 322, 331, 332) à travers au moins un élément élastiquement extensible (323, 333) ;
de sorte que lorsque la surface d'aile (210) est heurtée par l'écoulement de fluide (F), l'aile tourne, effectuant ainsi des oscillations autour de l'axe (R), et l'axe (R) se déplace, effectuant ainsi des oscillations le long de la trajectoire (420, 430) ;
l'aimant étant associé à la structure fixe (310, 321, 322, 331, 332) et la bobine étant associée à l'aile mobile (200), ou
la bobine (523, 533) étant associée à la structure fixe (310, 321, 322, 331, 332) et l'aimant (220, 230) étant associé à l'aile mobile (200).

2. Système (1) de production d'énergie électrique, comprenant une aile (200) et un cadre (300) ;
l'aile (200) étant conçue pour être heurtée par un écoulement de fluide (F) et ainsi se déplacer, et comprenant :
une surface d'aile (210), et
un premier pivot (220) et un second pivot (230) ayant le même axe (R) et faire saillie de ladite surface d'aile (210) sur des côtés opposés ;
le cadre (300) étant conçu pour rester fixe et comprenant :
une structure (310, 321, 322, 331, 332) ;
le premier pivot (220) étant contraint de façon permanente sur ladite structure (310, 321, 322, 331, 332) par l'intermédiaire d'un premier élément avant extensible élastiquement (323) et éventuellement d'un premier élément arrière extensible élastiquement (324), moyennant quoi le premier pivot (220) est conçu pour se déplacer alternativement le long d'une première trajectoire (420) prédéfinie lorsque ladite aile (200) est heurtée par l'écoulement de fluide (F) ;
le second pivot (230) étant contraint de façon permanente sur ladite structure (310, 321, 322, 331, 332) par l'intermédiaire d'un second élément avant élastiquement extensible (333) et éventuellement d'un second élément arrière élastiquement extensible (334), moyennant quoi le second pivot (230) est conçu pour se déplacer alternativement le long d'une seconde trajectoire prédéfinie (430) lorsque ladite aile (200) est heurtée par l'écoulement de fluide (F) ;
la surface d'aile (210) étant conçue pour tourner librement autour dudit même axe (R) lorsque ladite aile (200) est heurtée par l'écoulement de fluide (F) ;
le premier pivot (220) étant associé à un premier aimant ;
le second pivot (230) étant associé à un second aimant ;
la première trajectoire (420) étant associée à au moins une première bobine (523), de préférence une première pluralité de bobines (521, 522, 523, 524, 525) ;
la seconde trajectoire (430) étant associée à au moins une seconde bobine (533), de préférence une seconde pluralité de bobines (531, 532, 533, 534, 535) ;
moyennant quoi le mouvement de ladite aile (200) lorsqu'elle est heurtée par l'écoulement de fluide (F) provoque des courants électriques induits dans la première bobine (523), ou dans la première pluralité de bobines (521, 522, 523, 524, 525), et dans la seconde bobine (533), ou dans la seconde pluralité de bobines (531, 532, 533, 534, 535).

3. Système de production d'énergie électrique, comprenant une aile et un cadre ;
l'aile étant conçue pour être heurtée par un écoulement de fluide et ainsi se déplacer, et comprenant :
une surface d'aile, et
un premier pivot et un second pivot ayant le même axe et faisant saillie de ladite surface de l'aile sur des côtés opposés ;
le cadre étant conçu pour rester fixe et comprenant :
une structure ;
le premier pivot étant contraint de façon permanente sur ladite structure par l'intermédiaire d'un premier élément avant extensible élastiquement et éventuellement d'un premier élément arrière extensible élastiquement, moyennant quoi le premier pivot est conçu pour se déplacer alternativement le long d'une première trajectoire prédéfinie lorsque ladite aile est heurtée par l'écoulement de fluide ;
le second pivot étant contraint de façon permanente sur ladite structure par l'intermédiaire d'un second élément avant élastiquement extensible et éventuellement d'un second élément arrière élastiquement extensible, moyennant quoi le second pivot est conçu pour se déplacer alternativement le long d'une seconde trajectoire prédéfinie lorsque ladite aile est heurtée par l'écoulement de fluide ;
la surface d'aile étant conçue pour tourner librement autour dudit même axe lorsque ladite aile est heurtée par l'écoulement de fluide ;
le premier pivot étant associé à une première bobine ;
le second pivot étant associé à une seconde bobine ;
la première trajectoire étant associée à au moins un premier aimant, de préférence une première pluralité d'aimants ;
la seconde trajectoire étant associée à au moins un second aimant, de préférence une seconde pluralité d'aimants ;
moyennant quoi le mouvement de ladite aile lorsqu'elle est heurtée par l'écoulement de fluide provoque des courants électriques induits dans la première bobine et dans la seconde bobine.

4. Système de production d'énergie électrique selon la revendication 2 ou 3, lesdites première et seconde trajectoires (420, 430) étant rectilignes et verticales.

5. Système de production d'énergie électrique selon la revendication 2 ou 3 ou 4,
chacun desdits premier et second éléments avant (323, 333) ayant une extrémité fixée à un point avant inférieur (321, 331) de ladite structure, et/ou
chacun desdits premier et second éléments arrière (324, 334) ayant une extrémité fixée à un point arrière inférieur (322, 332) de ladite structure.

6. Système de production d'énergie électrique selon l'une quelconque des revendications 2 à 5, comprenant un conduit (340) dans lequel ladite aile (200) est placée et se déplace.

7. Système de production d'énergie électrique selon l'une quelconque des revendications 2 à 6,
comprenant un premier guide pour guider le mouvement dudit premier pivot,
comprenant un second guide pour guider le mouvement dudit second pivot.

8. Système de production d'énergie électrique selon l'une quelconque des revendications 2 à 7, comprenant un supercondensateur (1004) pour stocker l'énergie électrique associée auxdits courants électriques induits.

9. Système de production d'énergie électrique selon la revendication 8, comprenant un redresseur actif (1002) connecté électriquement en amont dudit supercondensateur (1004), un régulateur de tension (1006) connecté électriquement en aval dudit supercondensateur (1004), et un processeur (1008) pour commander la production et la consommation d'énergie électrique.

10. Unité de capteur comprenant un capteur (1021, 1022, 1023, 1024), un émetteur (1010) et un système générateur selon l'une quelconque des revendications 2 à 9, l'émetteur (1010) étant connecté électriquement audit capteur (1021, 1022, 1023, 1024) et est conçu pour transmettre des mesures, lesdites mesures étant effectuées par ledit capteur (1021, 1022, 1023, 1024), ledit capteur (1021, 1022 1023 1024) et ledit émetteur (1010) étant alimentés par ledit système générateur (1002, 1004, 1006).

11. Unité de capteur selon la revendication 10, ledit émetteur (1010) étant conçu pour transmettre des mesures à une unité électronique de collecte de données.

12. Unité de capteur selon la revendication 10 ou 11, comprenant un dispositif de stockage d'énergie électrique (1004), ledit émetteur (1010) étant conçu pour transmettre des mesures uniquement si ledit dispositif (1004) contient au moins une première quantité prédéfinie d'énergie électrique.

13. Unité de capteur selon la revendication 12, ledit capteur (1021, 1022, 1023, 1024) étant conçu pour effectuer des mesures uniquement si ledit dispositif (1004) contient au moins une seconde quantité prédéfinie d'énergie électrique, ladite seconde quantité étant inférieure à ladite première quantité.

14. Unité de capteur selon l'une quelconque des revendications 10 à 13, conçue pour être fixée à un bâtiment, en particulier une façade d'un bâtiment, ou une construction civile, en particulier une structure de pont, et pour produire de l'énergie électrique due au vent, ledit capteur détectant des efforts ou des contraintes ou des déformations ou des déplacements dans/de ladite construction.

15. Unité de capteur selon l'une quelconque des revendications 10 à 13, conçue pour être fixée à l'intérieur d'une conduite d'alimentation en gaz et pour générer de l'énergie électrique par l'écoulement de gaz dans la conduite, ledit capteur détectant l'écoulement de gaz.
